# EUROPEAN PATENT APPLICATION

(11) **EP 4 464 594 A1**
(43) Date of publication of application: **20.11.2024**
(21) Application number: 22928871.7
(22) Date of filing: 04.11.2022
(51) Int. Cl.: B63H 21/38

(54) **FLOATING STRUCTURE**

(30) Priority: 25.02.2022 JP 2022027397
(71) Applicant: Mitsubishi Heavy Industries, Ltd., Tokyo 100-8332 (JP)
(72) Inventor: YAMADA Daisuke, Yokohama-shi, Kanagawa 220-8401 (JP); WATANABE Yusuke, Yokohama-shi, Kanagawa 220-8401 (JP); HONDA Akihiro, Yokohama-shi, Kanagawa 220-8401 (JP)
(74) Representative: Studio Torta S.p.A.
(86) International application number: PCT/JP2022/041150
(87) International publication number: WO 2023/162353

(57) **Abstract**

This floating structure has a body and multiple equipment units provided on the body, each of the equipment units comprising: ammonia fuel-handling equipment; and a cover for covering the ammonia fuel-handling equipment such that the ammonia fuel-handling equipment is on the inside of the cover.

## Description

### Technical Field

The present disclosure relates to a floating structure.

This application claims priority to Japanese Patent Application No. 2022-027397, filed in Japan on February 25, 2022, the content of which is incorporated herein by reference.

### Background Art

In floating structures such as ships, in a case where a combustible gas as fuel for propulsion or as cargo is loaded, measures are being taken in preparation for the event of gas leakage from a tank containing the combustible gas or a pipe system connected to the tank.

PTL 1 discloses a configuration in which an ammonia storage tank, an ammonia injection nozzle, and an ammonia supply pipe are configured to have a duplicate structure so that ammonia does not leak into a ship. In this configuration, the ammonia storage tank storing the ammonia is accommodated in an ammonia storage tank chamber. A base end portion of the ammonia injection nozzle for jetting the ammonia stored in the ammonia storage tank is accommodated in an ammonia injection nozzle chamber. An ammonia supply pipe that guides the ammonia stored in the ammonia storage tank to the ammonia injection nozzle is accommodated in a duct.

Meanwhile, PTL 2 discloses a configuration in which a circulation path of fresh water including a closed circuit in which ammonia circulates is interposed between a refrigerant circulation circuit including the closed circuit and a heat exchange target side (load side, seawater side) in a heat exchanger (condenser and evaporator) using ammonia as a refrigerant. In PTL 2, heat exchange is performed between the ammonia as a refrigerant and a heat exchange target via fresh water. In addition, in PTL 2, in a case where the ammonia leaks, the leaked ammonia is dissolved in the fresh water to suppress leakage to the heat exchange target side.

### Citation List

### Patent Literature

[PTL 1] Japanese Unexamined Patent Application Publication No. 2012-82796
[PTL 2] Japanese Patent No. 3078789

### Summary of Invention

### Technical Problem

In the configuration as in PTL 1, since the storage tank, the injection nozzle, and the supply pipe are respectively duplicated, there is a problem in that the structure of the storage tank, the injection nozzle, and the supply pipe is complicated and the manufacturing cost is increased. Further, in PTL 2, although it is possible to suppress the leakage of ammonia in a refrigerating device and an air conditioning device, there is a problem in that it is difficult to apply the configuration to a case where ammonia is used as gas fuel.

The present disclosure has been made to solve the above problems, and an object of the present disclosure is to provide a floating structure capable of suppressing diffusion of ammonia into a floating main structure while suppressing an increase in complexity of a structure and an increase in cost.

### Solution to Problem

In order to solve the above problems, a floating structure according to the present disclosure includes a floating main structure, and a plurality of equipment units provided in the floating main structure, in which each of the plurality of equipment units includes ammonia fuel-handling equipment, and a cover that covers the ammonia fuel-handling equipment such that each of the ammonia fuel-handling equipment is disposed on an inner side.

### Advantageous Effects of Invention

According to the floating structure of the present disclosure, it is possible to suppress diffusion of ammonia into a floating main structure while suppressing an increase in complexity of a structure and an increase in cost.

### Brief Description of Drawings

Fig. 1 is a side view of a floating structure as a floating structure in a first embodiment of the present disclosure.
Fig. 2 is a plan view showing an equipment unit provided in the floating structure in the first embodiment of the present disclosure.
Fig. 3 is a side sectional view of the equipment unit in the first embodiment of the present disclosure.
Fig. 4 is a plan view showing an equipment unit provided in the floating structure in a second embodiment of the present disclosure.
Fig. 5 is a plan view showing an equipment unit provided in the floating structure in a third embodiment of the present disclosure.

### Description of Embodiments

### [First Embodiment]

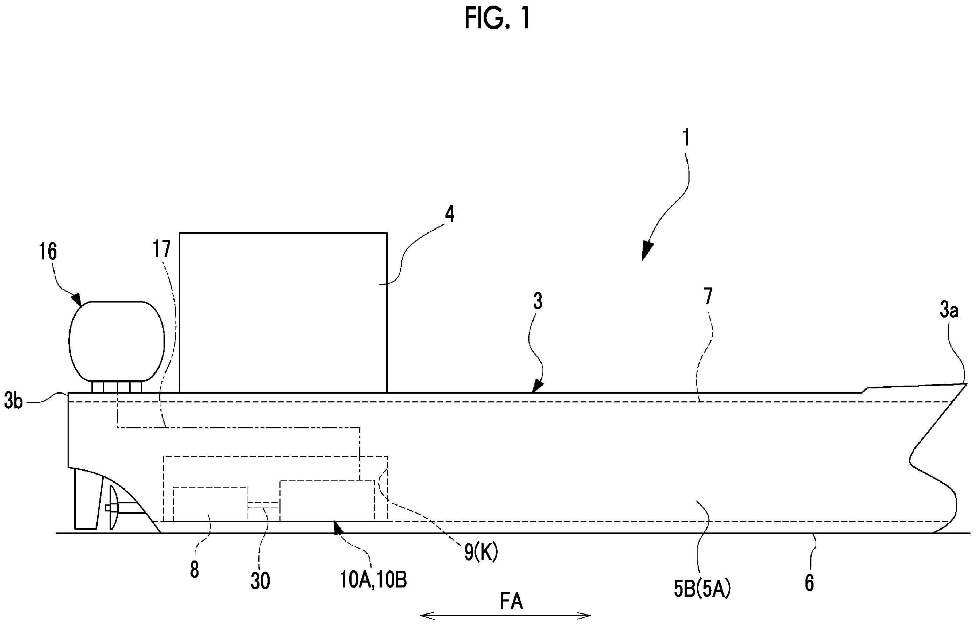

Hereinafter, a floating structure as a floating structure according to an embodiment of the present disclosure will be described with reference to Figs. 1 to 5.

### (Configuration of Floating Structure)

As shown in Fig. 1, a floating structure 1 of this embodiment includes a floating main structure 3, a superstructure 4, a combustion device 8, a plurality of equipment units 10A, an ammonia fuel tank 16, an ammonia supply line 17, and a pipe system 30. The floating structure 1 of the present embodiment will be illustratively described as a ship that can sail using a main engine or the like. A ship type of the floating structure 1 is not limited to a specific ship type. Examples of the ship type of the floating structure 1 include a liquefied gas carrier, a ferry, a RORO ship, a car carrier, and a passenger ship.

The floating main structure 3 includes a pair of broadsides 5A and 5B and a bottom 6 forming an outer shell of the floating main structure 3. The broadsides 5A and 5B include a pair of broadside plates respectively forming right and left broadsides. The bottom 6 includes a bottom plate connecting the broadsides 5A and 5B. The pair of broadsides 5A and 5B and the bottom 6 form the outer shell of the floating main structure 3 to have a U-shape in a cross section orthogonal to a bow-stem direction FA.

The floating main structure 3 further includes an upper deck 7 which is a through deck which is disposed in the uppermost layer. The superstructure 4 is formed on an upper deck 7. An accommodation space and the like are provided inside the superstructure 4. In the floating structure 1 of the present embodiment, for example, a cargo space (not shown) for loading cargo is provided closer to a bow 3a side than the superstructure 4 in the bow-stern direction FA.

The combustion device 8 is a device that generates thermal energy by combusting fuel and is provided inside the floating main structure 3. Examples of the combustion device 8 include an internal combustion engine used in a main engine for propulsion of the floating structure 1, an internal combustion engine used in a power generation facility that supplies power into the ship, and a boiler that generates steam as a working fluid. In the combustion device 8 of the present embodiment, as fuel, ammonia and another fuel such as light oil different from ammonia can be used by switching.

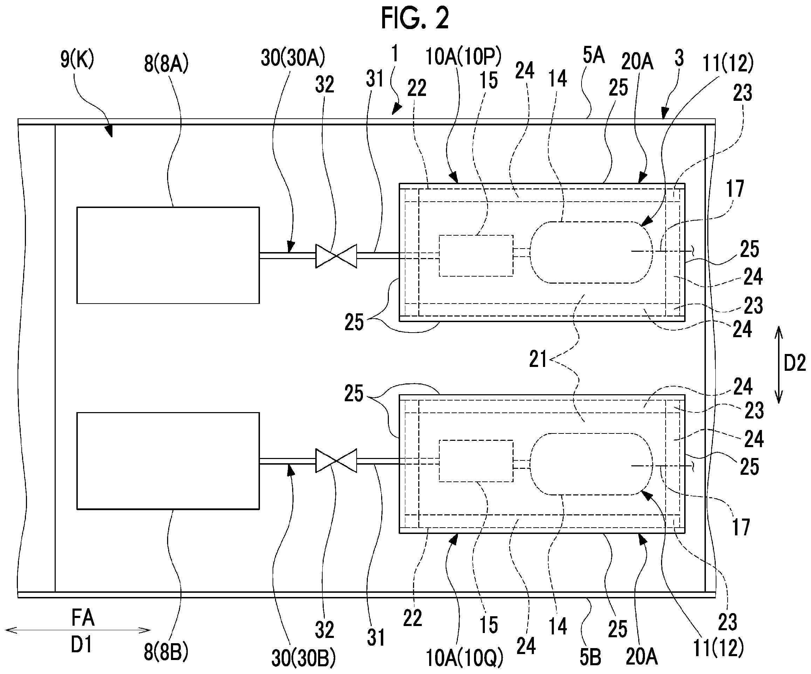

The plurality of equipment units 10A are provided in the floating main structure 3. In the present embodiment, for example, two equipment units 10A are disposed (refer to Fig. 2), but three or more equipment units 10A may be disposed. In the present embodiment, the plurality of equipment units 10A are disposed in the same compartment K in the floating main structure 3. The compartment K of the present embodiment is exemplified as an engine room 9. The plurality of equipment units 10A may be disposed in another chamber in the floating main structure 3 that is different from the engine room 9. In addition, the compartment in which the plurality of equipment units 10A are disposed may be provided on the upper deck 7.

The ammonia fuel tank 16 is a tank that stores liquid ammonia (in other words, liquefied ammonia). The ammonia fuel tank 16 is installed on the upper deck 7 closer to a stem 3b side than the superstructure 4. Disposition of the ammonia fuel tank 16 is an example and is not limited to the disposition on the upper deck 7 closer to the stern 3b side than the superstructure 4. The ammonia fuel tank 16 of the present embodiment stores liquefied ammonia as fuel for the combustion device 8.

The ammonia supply line 17 connects the ammonia fuel tank 16 and the equipment unit 10A and is configured to supply at least the ammonia stored in the ammonia fuel tank 16 to the equipment unit 10A. The ammonia supply line 17 is provided with a pump (not shown) that sends the ammonia of the ammonia fuel tank 16 to the equipment unit 10A.

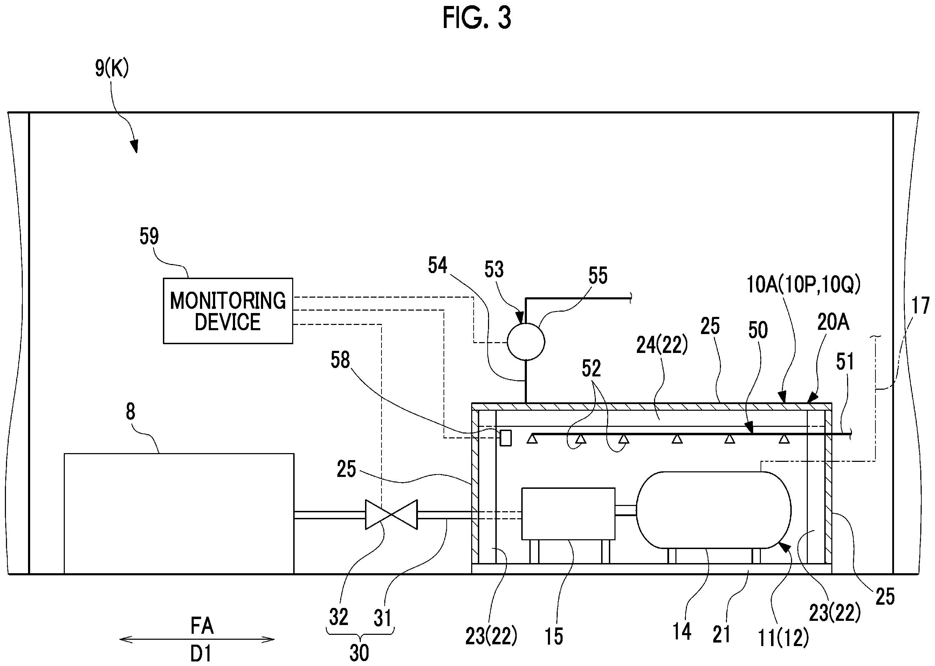

Fig. 2 is a plan view showing an equipment unit provided in the floating structure in the first embodiment of the present disclosure. Fig. 3 is a side sectional view of the equipment unit in the first embodiment of the present disclosure.

As shown in Figs. 1 to 3, each of the equipment units 10A includes ammonia fuel-handling equipment 11 and a housing 20A that accommodates the ammonia fuel-handling equipment 11.

The ammonia fuel-handling equipment 11 is various types of equipment that handle ammonia fuel. Examples of the ammonia fuel-handling equipment 11 include a pump that pumps ammonia from the ammonia fuel tank 16 to the combustion device 8, a heater that heats the ammonia sent to the combustion device 8, an electric valve, and the like. The ammonia fuel-handling equipment 11 means all equipment that handles ammonia, and examples thereof include ammonia fuel equipment that handles ammonia and ammonia cargo equipment that handles ammonia as cargo.

In the present embodiment, as the ammonia fuel-handling equipment 11, a fuel supply device 12 that supplies the ammonia fuel to the combustion device 8 is exemplified. The fuel supply device 12 includes a temporary storage tank 14 and a pump 15. The temporary storage tank 14 temporarily stores liquefied ammonia as fuel. The pump 15 feeds the ammonia fuel stored in the temporary storage tank 14 to the combustion device 8. The fuel supply device 12 includes various valves such as an opening-closing valve and a check valve, and the other equipment (none of which are shown) in addition to the temporary storage tank 14 and the pump 15 in order to control the interruption of the supply of the ammonia fuel to the combustion device 8.

The pipe system 30 connects the fuel supply device 12 of each of the equipment units 10A and the combustion device 8. The pipe system 30 supplies the liquefied ammonia of the temporary storage tank 14 to the combustion device 8, and returns the surplus ammonia remaining unused as fuel in the combustion device 8 to the temporary storage tank 14. In the present embodiment, only a configuration in which the liquefied ammonia of the temporary storage tank 14 is supplied to the combustion device 8 as the pipe system 30 is shown, and the pipe system 30 of the present embodiment includes a pipe 31 and a valve 32.

The pipe 31 connects the fuel supply device 12 and the combustion device 8 to each other, and guides the liquefied ammonia from the fuel supply device 12 to the combustion device 8. The valve 32 is provided in the pipe 31 and is capable of adjusting the flow rate of the liquefied ammonia flowing through the pipe 31.

In the present embodiment, the fuel supply device 12 of one equipment unit 10P of the two equipment units 10A supplies the liquefied ammonia to a combustion device 8A serving as a main engine. In addition, the fuel supply device 12 of the other equipment unit 10Q of the two equipment units 10A supplies the liquefied ammonia to a combustion device 8B used as an auxiliary machine such as a generator. That is, in the present embodiment, the pipe system 30A connecting the fuel supply device 12 of the one equipment unit 10P and the combustion device 8A and the pipe system 30B connecting the fuel supply device 12 of the other equipment unit 10Q and the combustion device 8B are individually provided.

As shown in Figs. 2 and 3, the housing 20A accommodates the ammonia fuel-handling equipment 11 in each of the equipment units 10A. The housing 20A includes a base 21, a frame 22, and a cover 25.

The base 21 is placed on the floor of the compartment K (engine room 9) where the equipment unit 10A is installed. The base 21 of the present embodiment is detachably fixed to the floor of the compartment K. The base 21 supports the ammonia fuel-handling equipment 11 from below. The base 21 has, for example, a rectangular shape in a plan view when viewed from above. In the present embodiment, the equipment unit 10A is disposed in a posture in which a long side direction D1 of the base 21 coincides with the bow-stem direction FA. In addition, the equipment unit 10A of the present embodiment is disposed such that a short side direction D2 of the base 21 coincides with the ship width direction. The base 21 is formed of, for example, a steel frame material or the like. The bottom surface or the upper surface of the base 21 may be closed by, for example, an iron plate or the like. The posture of the equipment unit 10A is not limited to the above posture.

The frame 22 is provided on the base 21. The frame 22 includes, for example, four columns 23 that stand upward from four corners of the base 21, and an upper beam material 24 that connects upper end portions of the columns 23 to each other. The frame 22 is formed to surround the ammonia fuel-handling equipment 11. The equipment unit 10A of the present embodiment is accommodated in a so-called container-shaped housing 20A including the base 21, the frame 22, and the cover 25. More specifically, the equipment unit 10A has an outer shape equivalent to that of the ISO standard marine container, with the base 21, the frame 22, and the cover 25.

The cover 25 is attached to the frame 22. The cover 25 is disposed to cover the upper portion of the frame 22 and the four side surfaces of the frame 22 when viewed from above. The cover 25 has a plate shape, and an outer peripheral portion thereof is fixed to the frame 22. The cover 25 may be formed of, for example, a resin-based material such as polycarbonate or acryl. In addition, the cover 25 may be formed of a light-transmitting material such that the entire cover 25 or at least a part of the cover 25 allows the internal state of the housing 20A to be visually recognized from the outside. The cover 25 may be formed of a material that does not contain copper or the like that reacts with ammonia by being in contact with ammonia, and is not limited to being formed of the above-described resin-based material.

As shown in Fig. 3, the equipment unit 10A of the present embodiment further includes a water sprinkling device 50 and a ventilation device 53.

The water sprinkling device 50 sprinkles water in the housing 20A in a case where the leakage of the ammonia fuel occurs in the housing 20A. The water sprinkling device 50 includes a water supply pipe 51 and a water sprinkling nozzle 52. The water supply pipe 51 supplies water from the outside of the housing 20A. The water sprinkling nozzle 52 sprinkles the water supplied through the water supply pipe 51 into the housing 20A. A plurality of the water sprinkling nozzles 52 may be provided in the upper portion in the housing 20A.

The ventilation device 53 discharges the vaporized ammonia to the outside of the housing 20A in a case where the leakage of the ammonia fuel occurs in the housing 20A. The ventilation device 53 includes a duct 54 and a fan 55. One end of the duct 54 is connected to a through-hole (not shown) formed in the cover 25 of the housing 20A. The other end of the duct 54 is connected to an exhaust duct (not shown) or a detoxification facility (not shown) provided in the floating main structure 3. The fan 55 discharges the ammonia (gas) that has occurred inside the housing 20A to the outside through the duct 54. The ventilation device 53 may be either a positive pressure type or a negative pressure type but is preferably a negative pressure type from the viewpoint of suppressing leakage of ammonia to the surroundings.

In addition, the pressure of the atmosphere in the housing 20A may be reduced due to the water sprinkling in the water sprinkling device 50, the exhaust of the ammonia (gas) in the ventilation device 53, or the like. For this reason, the equipment unit 10A may be provided with a relief valve (not shown) that is opened in a case where the pressure of the atmosphere in the housing 20A is reduced by a predetermined value or more, in the cover 25.

In addition, the equipment unit 10A may be provided with the water recovery unit (not shown) that recovers the water sprinkled by the water sprinkling device 50. As shown in Fig. 3, in the embodiment of the present disclosure, the water recovery unit (not shown) discharges, for example, the water sprinkled by the water sprinkling device 50 and stored in the bottom portion in the housing 20A to the outside of the housing 20A. Here, the water recovery unit (not shown) discharges the recovered water to the outside of the floating main structure 3.

In addition, the equipment unit 10A may be provided with the camera (not shown) that captures a state inside the housing 20A in a case where the leakage of the ammonia fuel occurs inside the housing 20A. The image (video) captured by the camera is displayed on a monitor or the like of a monitoring device 59 that monitors the operating state of the equipment unit 10A. The person in charge of monitoring the operating state of the equipment unit 10A can remotely confirm the state inside the housing 20A by viewing the monitor or the like.

Further, the equipment unit 10A may include a sensor 58 that detects the presence or absence of leakage of the ammonia fuel in the housing 20A. In a case where the occurrence of the leakage of the ammonia fuel in the housing 20A is detected by the sensor 58, the monitoring device 59 may externally notify that the leakage has occurred via a predetermined warning sound, a message, warning lamp lighting, or the like. Furthermore, in response to this, the person in charge of monitoring the operating state of the equipment unit 10A may perform an operation of operating the valve 32, the water sprinkling device 50, the ventilation device 53, the camera (not shown), or the like with the monitoring device 59. In addition, in the monitoring device 59, when the sensor 58 detects the occurrence of the leakage of the ammonia fuel in the housing 20A, the valve 32, the water sprinkling device 50, the ventilation device 53, the camera (not shown), or the like may be automatically operated based on a computer program set in advance.

### (Effects of Operation)

In the floating structure 1 of the above embodiment, the plurality of equipment units 10A including the ammonia fuel-handling equipment 11 are provided in the floating main structure 3. Each of the equipment units 10A includes the cover 25 that covers the ammonia fuel-handling equipment 11. Accordingly, even when the ammonia fuel leaks from the ammonia fuel-handling equipment 11, the leaked ammonia fuel is retained inside the cover 25. Accordingly, the diffusion of the ammonia fuel to the outside of the cover 25 is suppressed. The cover 25 may be provided for each of the ammonia fuel-handling equipment 11, and the diffusion of the ammonia fuel can be suppressed by a simple configuration. Therefore, it is possible to suppress diffusion of ammonia into the floating main structure 3 while suppressing an increase in complexity of a structure and an increase in cost.

In addition, in a case where the leakage of the ammonia fuel occurs in only some of the plurality of equipment units 10A, the operation of the ammonia fuel-handling equipment 11 can be continued in other equipment units 10A. In addition, in the equipment unit 10A in which the ammonia fuel leaks, in a case where the water sprinkling is performed by the water sprinkling device 50, the sprinkled water is suppressed from spreading to the outside of the housing 20A of the equipment unit 10A. As a result, the post-treatment after the water sprinkling can also be performed in a short time.

In the above embodiment, the equipment unit 10A further includes the water sprinkling device 50.

Accordingly, in a case where the ammonia fuel leaks from the ammonia fuel-handling equipment 11 into the cover 25, the ammonia is absorbed by the water by the water sprinkling device 50 sprinkling the water into the space in the cover 25. Therefore, it is possible to effectively suppress the diffusion of the ammonia into the floating main structure 3. In addition, since the volume inside the housing 20A is small as compared with a case where the water sprinkling is performed in the entire compartment K, the amount of water sprinkling can be reduced, and the ammonia can be quickly absorbed.

In addition, since the equipment unit 10A includes the ventilation device 53, in a case where the ammonia fuel leaks from the ammonia fuel-handling equipment 11 into the cover 25, the ammonia in the cover 25 can be discharged to the outside by the ventilation device 53. In this case, as compared with a case where ventilation is performed in the entire compartment K, the volume inside the housing 20A is small, and ventilation can be quickly performed. In addition, since the ventilation device 53 is provided in each of the equipment units 10A, the capacity of the fan 55 can be reduced, and thus the cost can be reduced.

In the above embodiment, the plurality of equipment units 10A are disposed in the same compartment K in the floating main structure 3. Accordingly, in a case where the plurality of equipment units 10A are disposed in the same compartment K in the floating main structure 3, even when the leakage of the ammonia fuel occurs in some equipment units 10A of the plurality of equipment units 10A, the leakage of the ammonia fuel to the outside of the cover 25 of the equipment units 10A in which the leakage of the ammonia fuel has occurred is suppressed. Therefore, the influence on other equipment units 10A can be suppressed, and the operation of the ammonia fuel-handling equipment 11 in other equipment units 10A can also be continued.

In the above-described embodiment, at least a part of the cover 25 is formed to be capable of transmitting light from the outside to the inside of the cover 25. Therefore, the operation of the ammonia fuel equipment, the presence or absence of leakage of the ammonia fuel, and the like inside the cover 25 can be visually confirmed from the outside of the cover 25.

The floating structure 1 of the above embodiment includes the base 21 and the frame 22 formed to surround the ammonia fuel-handling equipment 11, and the cover 25 is attached to the frame 22. Therefore, the equipment unit 10A can be transported and installed in the floating main structure 3 in the same manner as a container or the like. When the housing 20A has a size that can be transported by a vehicle such as a trailer or a truck, the housing 20A can be easily transported to the outside of the floating structure 1 when the housing 20A is installed. Further, by making the housing 20A have the same strength as or higher strength than that of a marine container such as a so-called ISO container, so-called stacking in which a plurality of the housings 20A are stacked and disposed up and down can also be performed.

In the above-described embodiment, since the ammonia fuel-handling equipment 11 includes the fuel supply device 12 capable of supplying the ammonia fuel, in a case where the ammonia fuel leaks in the fuel supply device 12 provided in the floating main structure 3, it is possible to suppress the diffusion of the ammonia into the floating main structure 3.

### [Second Embodiment]

Next, a second embodiment of the floating structure according to the present disclosure will be described. In the second embodiment that is described below, since only the configuration of the equipment unit is different from that in the first embodiment, the same portions as those in the first embodiment are denoted by the same reference numerals, and overlapping description is omitted.

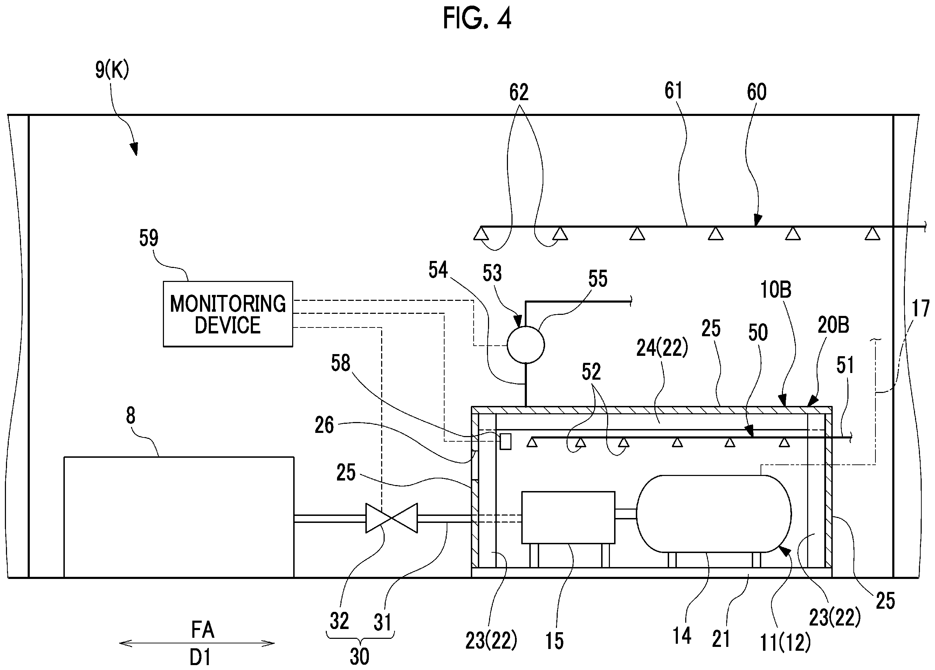

Fig. 4 is a plan view showing an equipment unit provided in the floating structure in a second embodiment of the present disclosure.

As shown in Fig. 4, an equipment unit 10B of the floating structure 1 of the second embodiment includes the ammonia fuel-handling equipment 11 and a housing 20B.

An opening 26 that allows the inside and the outside of the cover 25 to communicate with each other is formed in the cover 25 of the housing 20B.

In addition, the compartment K (engine room 9) in which a plurality of the housings 20B are disposed is provided with an in-compartment water sprinkling device 60. The in-compartment water sprinkling device 60 sprinkles water in the compartment K in a case where the leakage of the ammonia fuel occurs in at least one of the plurality of housings 20B. The in-compartment water sprinkling device 60 includes a water supply pipe 61 and a water sprinkling nozzle 62. The water supply pipe 61 supplies water from the outside of the compartment K. The water sprinkling nozzle 62 sprinkles the water supplied through the water supply pipe 61 into the compartment K. A plurality of the water sprinkling nozzles 62 may be provided in the upper portion in the housing 20B in the compartment K.

### (Effects of Operation)

According to the second embodiment, the cover 25 includes the opening 26, and the in-compartment water sprinkling device 60 is provided in the compartment K in which the equipment unit 10B is disposed. Therefore, in a case where the ammonia fuel leaks from the ammonia fuel-handling equipment 11, the ammonia fuel is discharged to the space outside the cover 25 through the opening 26. The ammonia is absorbed by the water sprinkling via the in-compartment water sprinkling device 60 with respect to the discharged ammonia fuel.

In addition, each equipment unit 10B includes the cover 25. Therefore, in a case where water is sprinkled from the in-compartment water sprinkling device 60, it is possible to suppress the ammonia fuel-handling equipment 11 of each equipment unit 10B from being wet with water.

### (Modification Example of Second Embodiment)

In the second embodiment, a case where the water sprinkling device 50 is provided in the housing 20B has been described. However, the water sprinkling device 50 provided in the housing 20B may be omitted. In addition, a case where the housing 20B is provided with the ventilation device 53 has been described. However, the ventilation device 53 may be omitted. In a case where the housing 20B is not provided with the ventilation device 53, the same configuration as the ventilation device 53 may be provided in the compartment K.

### [Third Embodiment]

Next, a third embodiment of the floating structure according to the present disclosure will be described. In the third embodiment that is described below, since only the configuration including the connection unit is different from that in the second embodiment, the same portions as those in the first embodiment are denoted by the same reference numerals, and overlapping description is omitted.

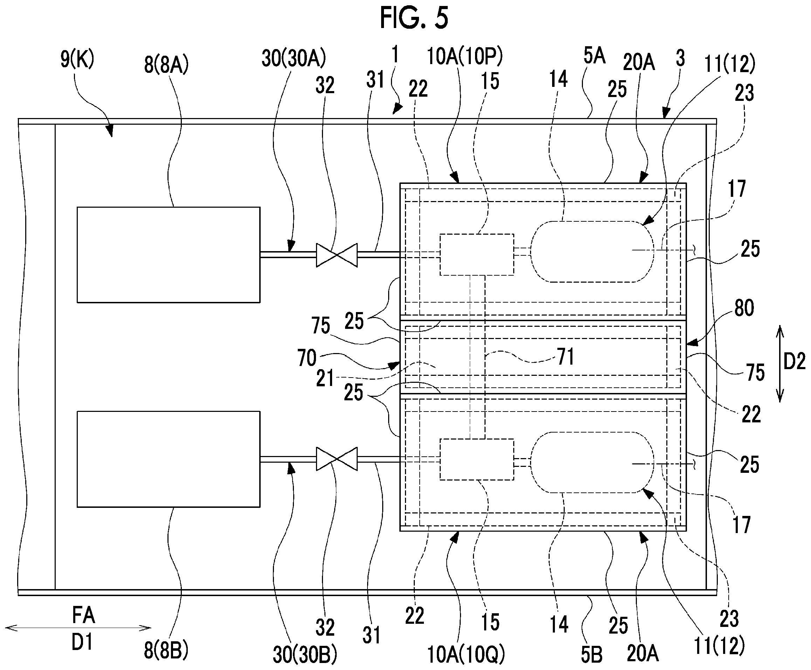

Fig. 5 is a plan view showing an equipment unit provided in the floating structure in a third embodiment of the present disclosure.

As shown in Fig. 5, the floating structure 1 of the third embodiment includes a connection unit 70 disposed between the plurality of equipment units 10A.

The plurality of equipment units 10A are disposed on the floor surface of the compartment K (engine room 9) at intervals in the horizontal direction. Here, in Fig. 5, a case where the plurality of equipment units 10A are disposed at intervals in the short side direction D2 of the equipment unit 10A having a rectangular shape in a plan view is exemplified. However, the plurality of equipment units 10A may be disposed at intervals in the long side direction D1 of the equipment unit 10A having a rectangular shape in a plan view. In addition, the connection unit 70 can be stacked and disposed on the equipment unit 10A up and down, which is so-called stacking.

The connection unit 70 includes a connection pipe 71. The connection pipe 71 connects the ammonia fuel-handling equipment 11 of the adjacent equipment units 10A with the connection unit 70 interposed therebetween. The connection unit 70 includes a housing 80 that covers the connection pipe 71. The housing 80 includes the base 21 and the frame 22, which are the same as those of the equipment unit 10A, and a pipe cover 75. The pipe cover 75 is attached to the frame 22 and is disposed to cover the upper portion and the side of the frame 22 between the plurality of equipment units 10A.

### (Effects of Operation)

According to the third embodiment, the connection pipe 71 and the pipe cover 75 covering the connection pipe 71 are disposed between the plurality of equipment units 10A. Therefore, even in a case where the ammonia fuel leaks from the connection pipe 71 provided to cross the plurality of equipment units 10A, the diffusion of the ammonia into the floating main structure 3 can be suppressed.

### (Modification Example of Third Embodiment)

In the third embodiment, the connection unit 70 including the connection pipe 71 and the pipe cover 75 is disposed between the plurality of equipment units 10A shown in the first embodiment. However, the equipment unit 10B shown in the second embodiment may be disposed instead of the equipment unit 10A.

### <Other Embodiments>

The embodiments of the present disclosure have been described in detail with reference to the drawings hereinbefore. However, the specific configuration is not limited to the embodiments, and includes design changes and the like within a scope not departing from the gist of the present disclosure.

For example, in the above embodiment, a case where the floating structure 1 is a ship that can sail using a main engine or the like has been described. However, the floating structure 1 is not limited to a ship as long as it is a floating structure.

Further, in the above-described embodiment, the fuel supply device 12 of the one equipment unit 10P supplies the ammonia fuel to the combustion device 8A serving as the main engine, and the fuel supply device 12 of the other equipment unit 10Q supplies the ammonia fuel to the combustion device 8B used as the auxiliary machine. However, the present disclosure is not limited thereto. The ammonia fuel may be supplied from the fuel supply devices 12 of the plurality of equipment units 10A and 10B to one ammonia fuel-handling equipment 11. In addition, the ammonia fuel may be distributed and supplied from the fuel supply device 12 of the two equipment units 10A and 10B to three or more pieces of ammonia fuel-handling equipment 11.

In addition, in each of the above-described embodiments, the respective equipment units 10A and 10B are provided with the fuel supply device 12 as the ammonia fuel-handling equipment 11. However, the present disclosure is not limited to this configuration. For example, in addition to the fuel supply device 12, the combustion device 8 may be disposed in the housings 20A and 20B of the respective equipment units 10A and 10B.

Further, in each of the embodiments, a case has been described in which the respective equipment units 10A and 10B have a rectangular shape in a plan view and have an outer shape of an ISO container. However, the outer shapes of the equipment units 10A and 10B are not limited to the above outer shapes.

### <Additional Notes>

For example, the floating structure 1 described in each of the embodiments is understood as follows.

(1) A floating structure 1 according to a first aspect includes a floating main structure 3, and a plurality of equipment units 10A, 10B provided in the floating main structure 3, in which each of the plurality of equipment units 10A, 10B includes ammonia fuel-handling equipment 11, and a cover 25 that covers the ammonia fuel-handling equipment 11 such that each of the ammonia fuel-handling equipment 11 is disposed on an inner side.

Examples of the ammonia fuel-handling equipment 11 include the fuel supply device 12 and the combustion device 8.

In the floating structure 1, the plurality of equipment units 10A and 10B including the ammonia fuel-handling equipment 11 are provided in the floating main structure 3. Each of the equipment units 10A and 10B includes the cover 25 that covers the ammonia fuel-handling equipment 11. Accordingly, even when the ammonia fuel leaks from the ammonia fuel-handling equipment 11, the leaked ammonia fuel is retained inside the cover 25. The diffusion of the ammonia fuel to the outside of the cover 25 is suppressed. The cover 25 may be provided for each of the ammonia fuel-handling equipment 11, and the diffusion of the ammonia fuel can be suppressed by a simple configuration. Therefore, it is possible to suppress diffusion of ammonia into the floating main structure 3 in a case where the ammonia fuel leaks while suppressing an increase in complexity of a structure and an increase in cost.

(2) A floating structure 1 according to a second aspect is the floating structure 1 of (1), in which the equipment unit 10A, 10B further includes a water sprinkling device 50 capable of sprinkling water into a space in the cover 25.

Accordingly, in a case where the ammonia fuel leaks from the ammonia fuel-handling equipment 11 into the cover 25, the ammonia is absorbed by the water by the water sprinkling device 50 sprinkling the water into the space in the cover 25. Therefore, it is possible to effectively suppress the diffusion of the ammonia into the floating main structure 3.

(3) A floating structure 1 according to a third aspect is the floating structure 1 of (1) or (2), in which the plurality of equipment units 10A, 10B are disposed in the same compartment K in the floating main structure 3.

Accordingly, in a case where the plurality of equipment units 10A and 10B are disposed in the same compartment K in the floating main structure 3, even when the leakage of the ammonia fuel occurs in some equipment units 10A and 10B of the plurality of equipment units 10A and 10B, the leakage of the ammonia fuel to the outside of the cover 25 of the equipment units 10A and 10B in which the leakage of the ammonia fuel has occurred is suppressed. Therefore, the influence on other equipment units 10A and 10B can be suppressed, and the operation of the ammonia fuel-handling equipment 11 in other equipment units 10A and 10B can also be continued.

(4) A floating structure 1 according to a fourth aspect is the floating structure 1 of (3), in which the cover 25 has an opening 26 through which an inside and an outside of the cover 25 communicate with each other, and an in-compartment water sprinkling device 60 capable of sprinkling water in the compartment K in which the equipment unit 10B is disposed is provided in the compartment K.

Therefore, in a case where the ammonia fuel leaks from the ammonia fuel-handling equipment 11, the ammonia fuel is discharged to the space outside the cover 25 through the opening 26. The ammonia can be absorbed in water by the water sprinkling via the in-compartment water sprinkling device 60 with respect to the discharged ammonia fuel.

(5) A floating structure 1 according to a fifth aspect is the floating structure 1 of any one of (1) to (4), in which at least a part of the cover 25 is formed to be capable of transmitting light from an outside to an inside of the cover 25.

Accordingly, the presence or absence of the leakage of the ammonia fuel, and the like can be visually confirmed from the outside of the cover 25.

(6) A floating structure 1 according to a sixth aspect is the floating structure 1 of any one of (1) to (5), the floating structure 1 includes a base 21 that supports the ammonia fuel-handling equipment 11, and a frame 22 that is provided on the base 21 and is formed to surround the ammonia fuel-handling equipment 11, in which the cover 25 is attached to the frame 22.

Therefore, the equipment units 10A and 10B can be easily transported and installed in the floating main structure 3.

(7) A floating structure 1 according to a seventh aspect is the floating structure 1 of any one of (1) to (6), in which the ammonia fuel-handling equipment 11 includes a fuel supply device 12 capable of supplying ammonia fuel.

Therefore, it is possible to suppress diffusion of ammonia into the floating main structure 3 in a case where the ammonia fuel leaks, in the fuel supply device 12 provided in the floating main structure 3.

(8) A floating structure 1 according to an eighth aspect is the floating structure 1 of any one of (1) to (7), in which the plurality of equipment units 10A, 10B are disposed at intervals, and a connection pipe 71 that connects the ammonia fuel-handling equipment 11 of the plurality of equipment units 10A, 10B to each other and a pipe cover 75 that covers the connection pipe 71 are disposed between the plurality of equipment units 10A, 10B.

Accordingly, the connection pipe 71 for connecting the ammonia fuel-handling equipment 11 of the equipment units 10A and 10B to each other is also covered with the pipe cover 75. Therefore, in a case where the ammonia fuel leaks from the connection pipe 71, the diffusion of the ammonia into the floating main structure 3 can be suppressed.

### Industrial Applicability

According to the floating structure of the present disclosure, it is possible to suppress diffusion of ammonia into a floating main structure while suppressing an increase in complexity of a structure and an increase in cost.

### Reference Signs List

1: floating structure
3: floating main structure
3a: bow
4: superstructure
5A, 5B: broadside
6: bottom
7: upper deck
8, 8A, 8B: combustion device
9: engine room
10A, 10B, 10P, 10Q: equipment unit
11: ammonia fuel-handling equipment
12: fuel supply device
14: temporary storage tank
15: pump
16: ammonia fuel tank
17: ammonia supply line
20A, 20B: housing
21: base
22: frame
23: column
24: upper beam material
25: cover
25h: through-hole
26: opening
30, 30A, 30B: pipe system
31: pipe
32: valve
50: water sprinkling device
51: water supply pipe
52: water sprinkling nozzle
53: ventilation device
54: duct
55: fan
58: sensor
59: monitoring device
60: in-compartment water sprinkling device
61: water supply pipe
62: water sprinkling nozzle
70: connection unit
71: connection pipe
75: pipe cover
80: housing
K: compartment

## Claims

1. A floating structure comprising:
a floating main structure; and
a plurality of equipment units provided in the floating main structure,
wherein each of the plurality of equipment units includes
ammonia fuel-handling equipment, and
a cover that covers the ammonia fuel-handling equipment such that each of the ammonia fuel-handling equipment is disposed on an inner side.

2. The floating structure according to Claim 1,
wherein the equipment unit further includes a water sprinkling device capable of sprinkling water into a space in the cover.

3. The floating structure according to Claim 1 or 2,
wherein the plurality of equipment units are disposed in the same compartment in the floating main structure.

4. The floating structure according to Claim 3,
wherein the cover has an opening through which an inside and an outside of the cover communicate with each other, and
an in-compartment water sprinkling device capable of sprinkling water in the compartment in which the equipment unit is disposed is provided in the compartment.

5. The floating structure according to Claim 1 or 2,
wherein at least a part of the cover is formed to be capable of transmitting light from an outside to an inside of the cover.

6. The floating structure according to Claim 1 or 2, further comprising:
a base that supports the ammonia fuel-handling equipment; and
a frame that is provided on the base and is formed to surround the ammonia fuel-handling equipment,
wherein the cover is attached to the frame.

7. The floating structure according to Claim 1 or 2,
wherein the ammonia fuel-handling equipment includes a fuel supply device capable of supplying ammonia fuel.

8. The floating structure according to Claim 1 or 2,
wherein the plurality of equipment units are disposed at intervals, and
a connection pipe that connects the ammonia fuel-handling equipment of the plurality of equipment units to each other and a pipe cover that covers the connection pipe are disposed between the plurality of equipment units.
